# EUROPEAN PATENT APPLICATION

(11) **EP 4 679 567 A1**
(43) Date of publication of application: **14.01.2026**
(21) Application number: 23932812.3
(22) Date of filing: 01.12.2023
(51) Int. Cl.: H01M 10/633, H01M 10/613

(54) **TEMPERATURE CONTROL DEVICE AND CONTROL METHOD THEREOF, COMPUTER STORAGE MEDIUM, AND HEATING AND VENTILATION DEVICE**

(30) Priority: 11.04.2023 CN 202310384205
(71) Applicant: Chongqing Midea General Refrigeration Equipment Co., Ltd., Chongqing 401336 (CN); Hefei Midea Heating & Ventilating Equipment Co., Ltd., Hefei, Anhui 230088 (CN); Midea Group Co., Ltd., Foshan, Guangdong 528311 (CN)
(72) Inventor: WEI, Pengyun, Chongqing 401336 (CN); LUO, Mingbo, Chongqing 401336 (CN); LUO, Mingwen, Chongqing 401336 (CN)
(74) Representative: RGTH
(86) International application number: PCT/CN2023/135880
(87) International publication number: WO 2024/212541

(57) **Abstract**

Provided is a temperature control device and a control method therefor, a computer storage medium, and a heating and ventilation device. The control method includes: controlling a refrigerant main path to be in communication with a second refrigerant branch; obtaining an outlet temperature of a cooling liquid main path; and controlling the cooling liquid main path to be in communication with a second cooling liquid branch in response to the outlet temperature being greater than a first set value. According to the control method of the present disclosure, a refrigeration unit is controlled to operate, and the refrigerant main path is controlled to be in communication with the second refrigerant branch, to store cooling capacity in a cold storage device. When a battery pack has a cooling capacity demand, the cooling liquid main path is controlled to be in communication with the second cooling liquid branch, to transport the cooling capacity stored in the cold storage device to the battery pack through the second cooling liquid branch and the cooling liquid main path, to make up for insufficient cooling supply in an initial startup stage of a compressor and satisfy the cooling capacity demand of the battery pack.

## Description

### CROSS-REFERENCE TO RELATED APPLICATIONS

This application claims priorities to Chinese Patent Applications No. 202310384205.3, filed on April 11, 2023 and entitled "TEMPERATURE CONTROL DEVICE AND CONTROL METHOD FOR TEMPERATURE CONTROL DEVICE, AND COMPUTER STORAGE MEDIUM", the entire contents of which are incorporated herein by reference.

### FIELD

The present disclosure relates to the technical field of refrigeration devices, and in particular, to a temperature control device and a control method for a temperature control device, a computer storage medium, and a heating and ventilation device.

### BACKGROUND

During normal use of a battery, temperature control needs to be performed on the battery. A battery pack with high-density and high-temperature environment requirements has higher requirements for stability and reliability of heat dissipation, while setting strict requirements on refrigeration energy consumption. Currently, a refrigeration solution used in the energy storage industry mainly comprises an air-cooled air conditioner and an air-cooled chilled water air conditioner. The air-cooled chilled water air conditioner is more widely used due to its higher heat exchange efficiency. However, when the battery pack has a cooling capacity demand caused by switching of a temperature control mode or switching between shutdown and a startup state of the battery pack, a compressor of the commonly used air-cooled chilled water air conditioner, due to its inherent characteristic, has a transition time in its process from startup to stable output, resulting in discontinuous cooling capacity output of a liquid-cooled air conditioner, which fails to satisfy the cooling capacity demand of the battery pack.

### SUMMARY

An objective of the present disclosure is to at least solve a problem of discontinuous cooling capacity output of a liquid-cooled air conditioner during a process from startup to stable output of a compressor. This objective is achieved through the following technical solutions.

A first aspect of the present disclosure provides a control method for a temperature control device. The temperature control device comprises a refrigeration unit comprising a refrigerant main path, a first refrigerant branch, and a second refrigerant branch, the first refrigerant branch and the second refrigerant branch being connected in parallel with the refrigerant main path; a cooling capacity output system comprising a cooling liquid main path, a first cooling liquid branch, and a second cooling liquid branch, the first cooling liquid branch and the second cooling liquid branch being connected in parallel with the cooling liquid main path; a first heat exchanger, the first cooling liquid branch being thermally connected to the first refrigerant branch through the first heat exchanger; and a cold storage device, the second cooling liquid branch being thermally connected to the second refrigerant branch through the cold storage device. The control method comprises: controlling the refrigerant main path to be in communication with the second refrigerant branch; obtaining an outlet temperature of the cooling liquid main path; and controlling the cooling liquid main path to be in communication with the second cooling liquid branch in response to the outlet temperature being greater than a first set value.

According to the control method for the temperature control device of the present disclosure, before a battery pack has a cooling capacity demand, such as during a shutdown period of the battery pack or when a battery has a heating supply demand, the refrigeration unit is controlled to operate, and the refrigerant main path is controlled to be in communication with the second refrigerant branch, to store cooling capacity in the cold storage device. When the battery pack has the cooling capacity demand, i.e., when the outlet temperature of the cooling liquid main path is greater than a first set temperature, the cooling liquid main path is controlled to be in communication with the second cooling liquid branch, and the cooling capacity stored in the cold storage device is transported to the battery pack through the second cooling liquid branch and the cooling liquid main path, to make up for insufficient cooling supply in an initial startup stage of the compressor and satisfy the cooling capacity demand of the battery pack.

In addition, the control method according to the present disclosure may also have the following additional technical features.

In some embodiments of the present disclosure, the method further comprises, prior to said controlling the cooling liquid main path to be in communication with the second cooling liquid branch in response to the outlet temperature being greater than the first set value: obtaining an ambient temperature; and controlling the cooling liquid main path to be in communication with the second cooling liquid branch in response to the ambient temperature being greater than a second set value and the outlet temperature being greater than the first set value.

In some embodiments of the present disclosure, the control method further comprises: controlling the refrigerant main path to be in communication with the first refrigerant branch, the cooling liquid main path to be in communication with the first cooling liquid branch, and the second refrigerant branch to be disconnected in response to the ambient temperature being greater than the second set value and the outlet temperature being greater than the first set value.

In some embodiments of the present disclosure, the method further comprises, prior to said controlling the refrigerant main path to be in communication with the second refrigerant branch: obtaining an ambient temperature; and controlling the refrigerant main path to be in communication with the second refrigerant branch in response to the ambient temperature being smaller than or equal to a second set value.

In some embodiments of the present disclosure, the control method further comprises: controlling the refrigerant main path to be in communication with the first refrigerant branch, the cooling liquid main path to be in communication with the first cooling liquid branch, and the cooling liquid main path to be disconnected from the second cooling liquid branch in response to the outlet temperature being greater than the first set value and the ambient temperature being smaller than or equal to the second set value.

In some embodiments of the present disclosure, the control method further comprises: obtaining electricity price information; setting the second set value to a first temperature in response to an electricity price being in a valley period; and setting the second set value to a second temperature in response to the electricity price being in a peak period. The first temperature is greater than the second temperature.

In some embodiments of the present disclosure, the method further comprises, prior to said controlling the refrigerant main path to be in communication with the second refrigerant branch: obtaining shutdown information of the cooling capacity output system and electricity price information; and controlling the refrigerant main path to be in communication with the second refrigerant branch in response to an electricity price being in a valley period and based on the shutdown information.

In some embodiments of the present disclosure, the method further comprises, prior to said controlling the refrigerant main path to be in communication with the second refrigerant branch: obtaining an ambient temperature; obtaining shutdown information of the cooling capacity output system; and controlling the refrigerant main path to be in communication with the second refrigerant branch based on the shutdown information and in response to the ambient temperature being smaller than or equal to a second set value.

According to a technical solution of a second aspect of the present disclosure, a temperature control device is further provided. The temperature control device comprises: a refrigeration unit comprising a refrigerant circulation pipeline, the refrigerant circulation pipeline comprising a refrigerant main path, a first refrigerant branch, and a second refrigerant branch, the first refrigerant branch and the second refrigerant branch being connected in parallel with the refrigerant main path; a cooling capacity output system comprising a cooling liquid circulation pipeline, the cooling liquid circulation pipeline comprising a cooling liquid main path, a first cooling liquid branch, and a second cooling liquid branch, the first cooling liquid branch and the second cooling liquid branch being connected in parallel with the cooling liquid main path; a first heat exchanger, the first cooling liquid branch being thermally connected to the first refrigerant branch through the first heat exchanger; a cold storage device, the first cooling liquid branch being thermally connected to the first refrigerant branch through the first heat exchanger; a first temperature sensor disposed at an outlet end of the cooling liquid main path and configured to detect an outlet temperature of the cooling liquid main path; and a control apparatus electrically connected to the refrigeration unit, the cooling capacity output system, and the first temperature sensor. The control apparatus is configured to control connection/disconnection of the second refrigerant branch and the second cooling liquid branch based on the outlet temperature.

In some embodiments of the present disclosure, the temperature control device further comprises a second temperature sensor electrically connected to the control apparatus. The second temperature sensor is configured to detect an ambient temperature. The control apparatus is further configured to obtain electricity price information and control connection/disconnection of the first refrigerant branch, the second refrigerant branch, the first cooling liquid branch, and the second cooling liquid branch based on the electricity price information, the outlet temperature, and the ambient temperature.

In some embodiments of the present disclosure, the control device comprises a first valve assembly disposed in the refrigerant circulation pipeline and configured to control a refrigerant flow rate of the first refrigerant branch and the second refrigerant branch; and a second valve assembly disposed in the cooling liquid circulation pipeline and configured to control a refrigerant flow rate of the first cooling liquid branch and the second cooling liquid branch. The control apparatus is electrically connected to the first temperature sensor, the second temperature sensor, the first valve assembly, and the second valve assembly.

According to a third aspect of the present disclosure, a computer storage medium is further provided. The computer storage medium has computer-readable instructions stored thereon. The computer-readable instructions, when read by one or more processors, cause the one or more processors to execute the control method according to any one of the technical solutions of the first aspect.

According to a fourth aspect of the present disclosure, a heating and ventilation device is further provided. The heating and ventilation device comprises the temperature control device according to any one of the technical solutions of the second aspect.

### BRIEF DESCRIPTION OF the DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals. In the accompanying drawings:
FIG. 1 is a schematic flowchart of a control method for a temperature control device according to some embodiments of the present disclosure;
FIG. 2 is a schematic flowchart of a control method for a temperature control device according to some embodiments of the present disclosure;
FIG. 3 is a schematic flowchart of a control method for a temperature control device according to some embodiments of the present disclosure;
FIG. 4 is a schematic flowchart of a control method for a temperature control device according to some embodiments of the present disclosure;
FIG. 5 is a schematic flowchart of a control method for a temperature control device according to some embodiments of the present disclosure;
FIG. 6 is a schematic flowchart of a control method for a temperature control device according to some embodiments of the present disclosure;
FIG. 7 is a schematic flowchart of a control method for a temperature control device according to some embodiments of the present disclosure;
FIG. 8 is a schematic flowchart of a control method for a temperature control device according to some embodiments of the present disclosure;
FIG. 9 is a schematic structural diagram of a temperature control device according to some embodiments of the present disclosure; and
FIG. 10 is a schematic structural diagram of a temperature control device according to some embodiments of the present disclosure.

The reference numerals are as follows:
100, temperature control device;
10, refrigerant circulation pipeline; 11, refrigerant main path; 12, first refrigerant branch; 13, second refrigerant branch; 121, first electronic expansion valve; 131, second electronic expansion valve;
20, cooling liquid circulation pipeline; 21, cooling liquid main path; 22, first cooling liquid branch; 23, second cooling liquid branch; 24, three-way valve; 25, circulation water pump; 26, filter; 27, electric heating element;
30, first heat exchanger; 40, second heat exchanger; 50, cold storage device;
101, first temperature sensor; 102, second temperature sensor;
80, control apparatus; 60, fan unit; 70, compressor.

### detailed DESCRIPTION

Exemplary embodiments of the present disclosure will be described in detail below with reference to the drawings. Although the exemplary embodiments of the present disclosure are illustrated in the drawings, it should be understood that the present disclosure may be embodied in various forms and should not be construed as limited to the embodiments described herein. Instead, these embodiments are provided for a thorough understanding of the present disclosure, and can fully convey the scope of the present disclosure to those skilled in the art.

It should be understood that terms used herein are intended to describe particular exemplary embodiments only and are not intended to be limited thereto. Unless the context clearly indicates, otherwise singular forms of "a", "one" and "the" as used herein can also be interpreted as comprising plural forms. Terms "comprise", "contain" and "have" are inclusive and therefore specify the presence of stated features, steps, operations, elements, and/or components, but do not preclude the presence or an addition of one or more other features, steps, operations, elements, components, and/or a combination thereof. The method steps, processes, and operations described herein are not to be construed as necessitating that they be performed in a particular order described or illustrated, unless the order of performance is clearly indicated. It should also be understood that additional or alternative steps may be used.

Although terms "first", "second", "third", etc. may be used herein to describe multiple elements, components, regions, layers and/or sections, these elements, components, regions, layers and/or sections should not be limited by these terms. These terms may only be used to distinguish one element, component, region, layer or section from another region, layer or section. The terms such as "first", "second" or the other number terms do not imply a sequence or an order when used herein, unless specified otherwise. Therefore, a first element, component, region, layer or section discussed below may be represented as a second element, component, region, layer or section, without departing from the teachings of exemplary implementations.

For ease of description, spatially relative terms, such as "internal," "external," "inside," "outside," "beneath," "below," "on," and "below," may be used herein to describe a relation of one element or feature illustrated in the figures to another element or feature illustrated in the figures. These spatially relative terms are intended to comprise different orientations of devices in use or operation other than those depicted in the figures. For example, if a device in the figure is flipped over, an element described as "under other elements or features" or "below other elements or features" will then be oriented as "on other elements or features" or "above other elements or features". Thus, the example term "below ..." may comprise orientations of above and below. The device may be oriented differently (e.g., rotated 90 degrees or in other directions), and may be interpreted in accordance with spatially relative descriptors used herein.

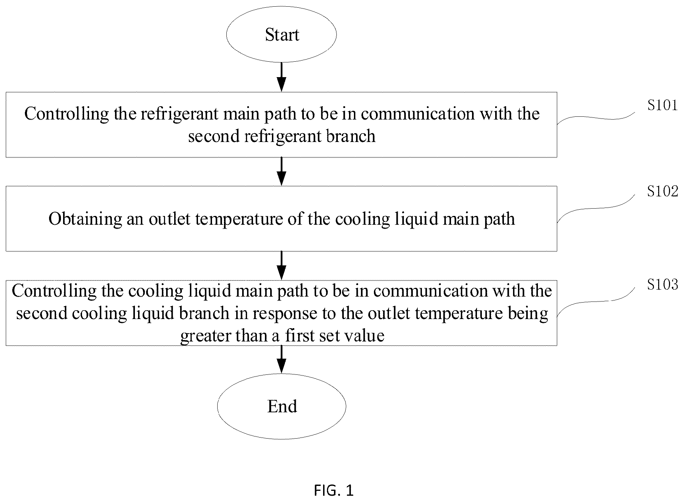

As shown in FIG. 1, according to the embodiments of the present disclosure, a control method for a temperature control device is provided.

The temperature control device comprises: a refrigeration unit, a cooling capacity output system, a first heat exchanger, and a cold storage device. The refrigeration unit is used to produce cooling capacity and output the cooling capacity to the cooling capacity output system. It can be understood that the cooling capacity output system is essentially an intermediate medium of the refrigeration unit for transferring the cooling capacity and is used to transport the cooling capacity produced by the refrigeration unit to a battery pack, a data computer room, and the like, to perform temperature control on the battery pack, the data computer room, and the like. The refrigeration unit has a refrigerant circulation pipeline. The refrigerant circulation pipeline comprises a refrigerant main path, a first refrigerant branch, and a second refrigerant branch. The first refrigerant branch and the second refrigerant branch are connected in parallel with the refrigerant main path, which makes the refrigerant main path and the first refrigerant branch form refrigerant flow circulation, and makes the refrigerant main path and the second refrigerant branch form refrigerant flow circulation. The cooling capacity output system has a cooling liquid circulation pipeline. The cooling liquid circulation pipeline comprises a cooling liquid main path, a first cooling liquid branch, and a second cooling liquid branch. The first cooling liquid branch and the second cooling liquid branch are connected in parallel with the cooling liquid main path, which makes the cooling liquid main path and the first cooling liquid branch form cooling liquid flow circulation, and makes the cooling liquid main path and the second cooling liquid branch form cooling liquid flow circulation. The first heat exchanger is an evaporator. The first cooling liquid branch is thermally connected to the first refrigerant branch through the first heat exchanger. A liquid refrigerant in the first refrigerant branch undergoes a phase change from liquid to gas in the first heat exchanger and absorbs heat, reducing a temperature of a cooling liquid in the first cooling liquid main path, and making the first cooling liquid branch obtain the cooling capacity. The cold storage device is filled with a cold storage material internally. The second cooling liquid branch is thermally connected to the second refrigerant branch through the cold storage device. A liquid refrigerant in the second refrigerant branch undergoes a phase change from liquid to gas in the cold storage device and absorbs heat, reducing a temperature of the cold storage material or causing the cold storage material to undergo a phase change, to make the cold storage device store the cooling capacity. When the cooling liquid main path is in communication with the second cooling liquid branch, the cooling capacity in the cold storage device may be outputted outwards through the second cooling liquid branch and the cooling liquid main path.

As shown in FIG. 1, the control method comprises operations at blocks S101 to S103.

At block S101, the refrigerant main path is controlled to be in communication with the second refrigerant branch.

At block S102, an outlet temperature of the cooling liquid main path is obtained.

At block S103, the cooling liquid main path is controlled to be in communication with the second cooling liquid branch in response to the outlet temperature being greater than a first set value.

In block S101, the refrigerant main path is in communication with the second refrigerant branch, and the liquid refrigerant in the second refrigerant branch undergoes a phase change from liquid to gas in the cold storage device and absorbs heat, which reduces the temperature of the cold storage material, or causes the cold storage material to undergo a phase change, to make the cold storage device store the cooling capacity. It can be understood that when block S101 is executed, before a cooling capacity demand occurs in the battery pack, the data computer room, or the like, for example, during a shutdown period of the battery pack or during a period of the battery pack, the data computer room, and the like having a heating supply demand, the refrigeration unit may be controlled to operate, and the refrigerant main path may be controlled to be in communication with the second refrigerant branch, to store the cooling capacity in the cold storage device. In block S102, the outlet temperature of the cooling liquid main path is essentially a temperature of a cooling liquid medium through which the temperature control device outputs the cooling capacity to the battery pack, the data computer room, or the like. When the outlet temperature is greater than the first set value, it indicates that the outlet temperature is relatively high. In this way, it can be reasonably inferred that a temperature of an internal environment of the battery pack or the data computer room is relatively high, and it is possible to occur a situation where a refrigerating capacity of the current temperature control device cannot satisfy the cooling capacity demand of the battery pack or the data computer room. Therefore, in block S103, the cooling liquid main path is controlled to be in communication with the second cooling liquid branch, and the cooling capacity stored in the cold storage device is transported to the battery pack through the second cooling liquid branch and the cooling liquid main path, to make up for insufficient cooling supply in an initial startup stage of a compressor in the refrigeration unit and satisfy the cooling capacity demand of the battery pack or the data computer room.

In some embodiments, before a heat transfer main path is controlled to be in communication with a second heat transfer branch, the method further comprises: obtaining a startup time T of the refrigeration unit, and controlling the heat transfer main path to be in communication with the second heat transfer branch in response to determining that the startup time T of the refrigeration unit being smaller than a set time value. In some embodiments, during a time period of a process from startup to the stable output of a compressor in a refrigerant system, a heat output quantity of the refrigerant system cannot satisfy a heat demand of the battery pack or the data computer room. Therefore, in some embodiments, a second predetermined condition may be set as a startup time period of the refrigerant system being smaller than the set time value, and the set time value is the time period of a process from the startup to the stable output of the compressor in the refrigerant system. The set time value varies according to an ambient temperature, a target adjustment temperature of the battery or the data computer room, and power of the refrigerant system. A value range of the set time value may be from 5 seconds to 20 minutes. For example, the set time value may be 10s, 20s, 30s, 50s, 1 minute, 5 minutes, or the like.

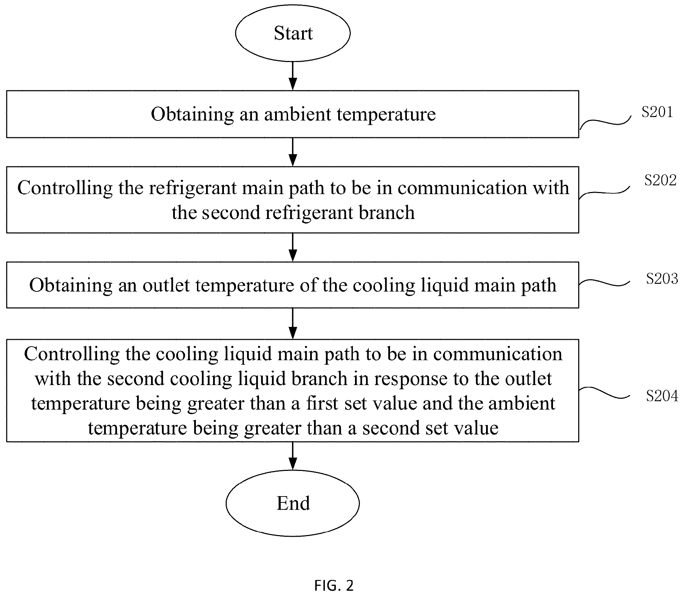

As shown in FIG. 2, according to some embodiments of the present disclosure, the control method comprises operations at blocks S201 to S204.

At block S201, an ambient temperature is obtained.

At block S202, the refrigerant main path is controlled to be in communication with the second refrigerant branch.

At block S203, an outlet temperature of the cooling liquid main path is obtained.

At block S204, the cooling liquid main path is controlled to be in communication with the second cooling liquid branch in response to the outlet temperature being greater than the first set value and the ambient temperature being greater than a second set value.

In this embodiment, block S202 is the same as block S101, block S203 is the same as block S102, and details are omitted herein. In block S201, an operating environment of the refrigeration unit may be known by obtaining ambient temperature information, and comprise heat exchange efficiency between a condenser of the refrigeration unit and outside air. Generally, under a predetermined refrigeration demand, the higher the ambient temperature, the lower heat exchange efficiency of the condenser, and the higher a load and energy consumption of the refrigeration unit. Therefore, in block S204, when the ambient temperature is greater than the second set value, it indicates that the ambient temperature is relatively high. In this state, since the compressor has a transition time from startup to stable output, causing the compressor not to timely supply sufficient cooling capacity to the battery pack or the data computer room, by controlling the cooling liquid main path to be in communication with the second cooling liquid branch, the cooling capacity stored in the cold storage device may be transported to the battery pack through the second cooling liquid branch and the cooling liquid main path, to make up for a shortage caused by power limitation of the compressor itself in the refrigeration unit, reduce the load of the refrigeration unit, avoid damage to the refrigeration unit due to overload operation of the refrigeration unit on the premise of satisfying the cooling capacity demand of the battery pack or the data computer room, and facilitate long-term stable operation of the temperature control device.

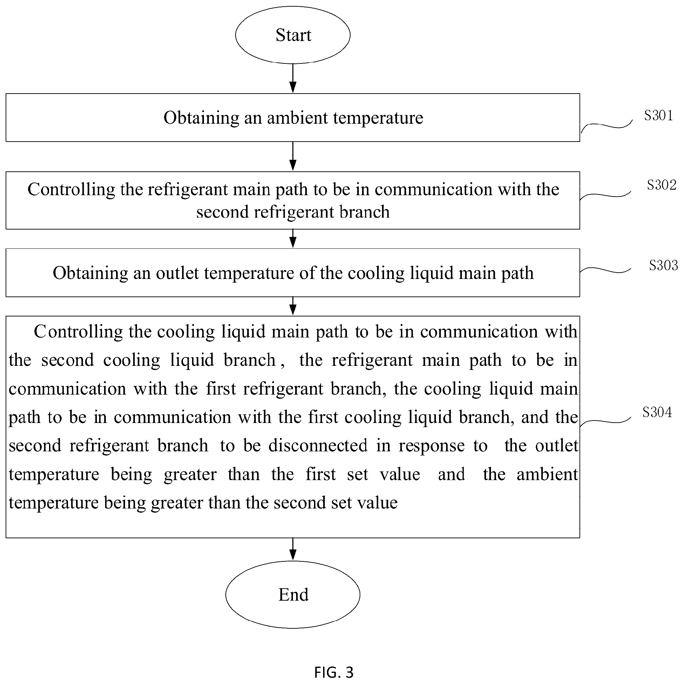

As shown in FIG. 3, according to some embodiments of the present disclosure, the control method comprises operations at blocks S301 to S304.

At block S301, an ambient temperature is obtained.

At block S302, the refrigerant main path is controlled to be in communication with the second refrigerant branch.

At block S303, an outlet temperature of the cooling liquid main path is obtained.

At block S304, in response to the outlet temperature being greater than the first set value and the ambient temperature being greater than the second set value, the cooling liquid main path is controlled to be in communication with the second cooling liquid branch, the refrigerant main path is controlled to be in communication with the first refrigerant branch, and the cooling liquid main path is controlled to be in communication with the first cooling liquid branch, and the second refrigerant branch is controlled to be disconnected.

In this embodiment, blocks S301 to S303 are the same as blocks S201 to S203, and details are omitted herein. In block S304, when the ambient temperature is greater than the second set value, it indicates that the ambient temperature is relatively high, and a load of the compressor in the refrigeration unit is relatively large at this time. When the ambient temperature is too high, a refrigerating capacity of the compressor is insufficient to satisfy the cooling capacity demand of the battery pack or the data computer room. On the one hand, by controlling the cooling liquid main path to be in communication with the second cooling liquid branch, the cooling capacity of the cold storage device is used to cool part of a cooling liquid in the cooling liquid main path to output part of the cooling capacity. On the other hand, the second refrigerant branch is disconnected, and the refrigeration unit stops supplying cooling to the cold storage device. The refrigerant main path is in communication with the first refrigerant branch, and all cooling capacity produced by the refrigeration unit is concentrated in the first heat exchanger. The cooling liquid main path is in communication with the first cooling liquid branch, and the cooling capacity of the first heat exchanger in the refrigeration unit is used to cool the rest of the cooling liquid in the cooling liquid main path, to ensure that the cooling capacity demand of the battery pack or the data computer room may be satisfied. In this embodiment, the cooling capacity stored in the cold storage device is used to make up for the shortage caused by the power limitation of the compressor itself in the refrigeration unit, reduce the load of the refrigeration unit, avoid high-frequency operation of the compressor in the refrigeration unit on the premise of satisfying the cooling capacity demand of the battery pack or the data computer room, and facilitate the long-term stable operation of the temperature control device.

It should be noted that in this embodiment, the outlet temperature of the cooling liquid main path may be adjusted by adjusting flow rates of cooling liquids in the first cooling liquid branch and the second cooling liquid branch, which enables the outlet temperature of the cooling liquid main path to be smaller than or equal to the first set value, and causes the compressor in the refrigeration unit to operate within rated power on the premise of satisfying the cooling capacity demand of the battery pack or the data computer room.

Further, in this embodiment, the control method further comprises the operation of obtaining electricity price information. In some embodiments, the electricity price information refers to a peak-valley time-of-use electricity price. The peak-valley time-of-use electricity price means that 24 hours a day are divided into a plurality of time periods such as peak, flat and valley periods according to a load change in the power grid, and different electricity price levels are set for each period to encourage electricity customers to arrange their electricity usage time reasonably, shift electricity from peak periods to off peak periods, and improve utilization efficiency of power resources. The peak and valley periods of the electricity price vary in different cities and seasons. Therefore, the peak and valley periods of the electricity price can be determined according to factors such as an actual region and a season where the temperature control device is located. For example, in some cities, such as Beijing, the peak period of the electricity price ranges from 10:00 to 15:00 and from 18:00 to 21:00, and the valley period ranges from 23:00 to 7:00. In summer, the highest peak period of the electricity price in Beijing ranges from 11:00 to 13:00. For another example, in Guangzhou, the peak period of the electricity price ranges from 10:00 to 12:00 and from 14:00 to 19:00, and the valley period ranges from 00:00 to 8:00. Therefore, considering comprehensive factors such as improving a utilization rate of power resources and saving electricity costs, when the electricity price is in the valley period, the second set value is set to a first temperature. When the electricity price is in the peak period, the second set value is set to a second temperature. The first temperature is greater than the second temperature.

It can be understood that when the electricity price is in the valley period, there are fewer electricity customers, and the electricity cost is relatively low, so an ambient temperature condition for determining that the cold storage device performs cooling release to output the cooling capacity to the battery pack or the data computer room can be appropriately increased. For example, the second set value is set to the first temperature. When the electricity price is in the peak period, the electricity cost is relatively high, so the ambient temperature condition for determining that the cold storage device performs the cooling release can be appropriately reduced. For example, the second set value is set to the second temperature. It can reduce the electricity cost of the temperature control device and improve the utilization efficiency of power resources on the premise of satisfying the cooling capacity demand of the battery pack or the data computer room.

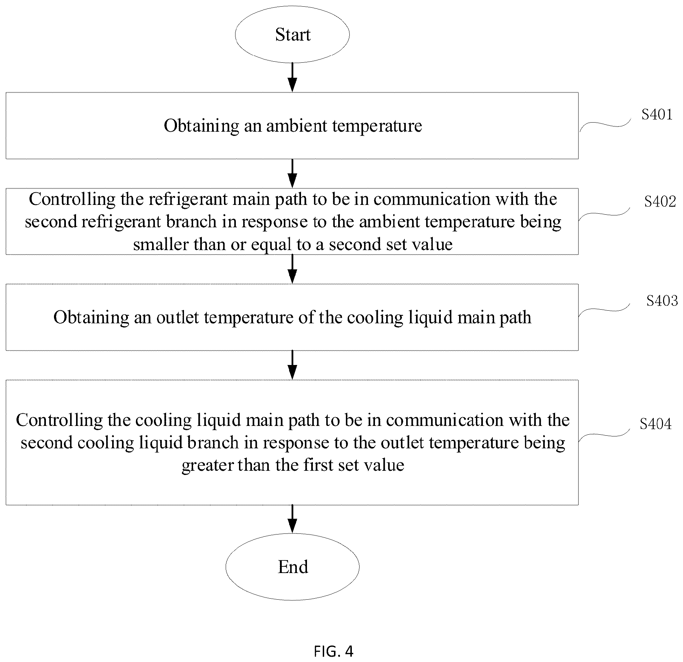

As shown in FIG. 4, according to some embodiments of the present disclosure, the control method comprises operations at blocks S401 to S404.

At block S401, an ambient temperature is obtained.

At block S402, the refrigerant main path is controlled to be in communication with the second refrigerant branch in response to the ambient temperature being smaller than or equal to a second set value.

At block S403, an outlet temperature of the cooling liquid main path is obtained.

At block S404, the cooling liquid main path is controlled to be in communication with the second cooling liquid branch in response to the outlet temperature being greater than a first set value.

In this embodiment, blocks S403 to S404 are the same as blocks S103 to S104, and details are omitted herein. In block S402, the operating environment of the refrigeration unit may be known by obtaining the ambient temperature information, and comprise the heat exchange efficiency between the condenser of the refrigeration unit and the outside air. Generally, under the predetermined refrigeration demand, the lower the ambient temperature, the higher the heat exchange efficiency of the condenser, and the lower the load and the energy consumption of the refrigeration unit. Therefore, in block S303, when the ambient temperature is smaller than or equal to the second set value, it indicates that the ambient temperature is relatively low. Therefore, the low ambient temperature is used to start the refrigeration unit, to cause the refrigerant main path to be in communication with the second refrigerant branch, and achieve a purpose of storing relatively much cooling capacity in the cold storage device with relatively low energy consumption, reducing overall energy consumption during long-term temperature control of the battery pack or the data computer room.

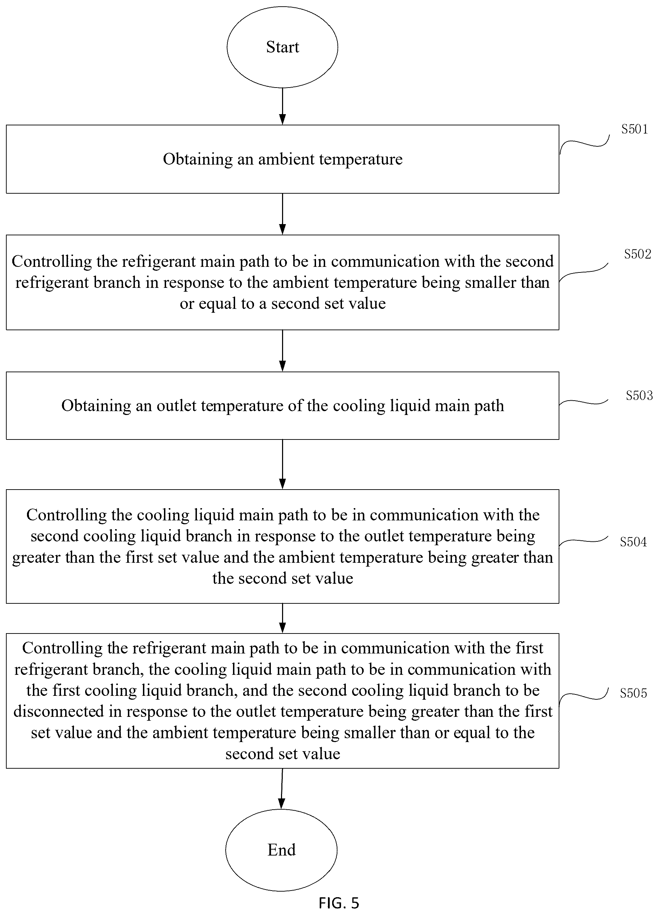

As shown in FIG. 5, according to some embodiments of the present disclosure, the control method comprises operations at blocks S501 to S505.

At block S501, an ambient temperature is obtained.

At block S502, the refrigerant main path is controlled to be in communication with the second refrigerant branch in response to the ambient temperature being smaller than or equal to a second set value.

At block S503, an outlet temperature of the cooling liquid main path is obtained.

At block S504, the cooling liquid main path is controlled to be in communication with the second cooling liquid branch in response to the outlet temperature being greater than the first set value and the ambient temperature being greater than the second set value.

At block S505, in response to the outlet temperature being greater than the first set value and the ambient temperature being smaller than or equal to the second set value, the refrigerant main path is controlled to be in communication with the first refrigerant branch, the cooling liquid main path is controlled to be in communication with the first cooling liquid branch, and the second cooling liquid branch is controlled to be disconnected.

In this embodiment, blocks S501 to S504 are the same as blocks S401 to S404, and details are omitted herein.

In block S505, when the ambient temperature is smaller than or equal to the second set value, it indicates that the ambient temperature is relatively low, and the load of the compressor in the refrigeration unit is relatively small at this time. When the ambient temperature is relatively low, a surplus of the refrigerating capacity of the compressor may occur, causing the compressor to operate at a low frequency. In this embodiment, on the one hand, when the compressor of the refrigeration unit operates at a normal frequency, by controlling the refrigerant main path to be in communication with the second refrigerant branch, an excess part of the cooling capacity produced by the refrigeration unit is stored in the cold storage device, and the second cooling liquid branch is disconnected, to avoid or reduce the loss or leakage of the cooling capacity in the cold storage device. On the other hand, the refrigerant main path is in communication with the first refrigerant branch to transport part of the cooling capacity to the first heat exchanger. Moreover, through the communication between the cooling liquid main path and the first cooling liquid branch, the part of the cooling capacity outputted to the first heat exchanger is supplied to the battery pack or the data computer room to satisfy the cooling capacity demand of the battery pack or the data computer room.

In this embodiment, the excess part of the cooling capacity produced by the refrigeration unit is stored in the cold storage device. When the battery pack or the data computer room has the cooling capacity demand, the cooling capacity stored in the cold storage device is transported to the battery pack to make up for the insufficient cooling supply in the initial startup stage of the compressor in the refrigeration unit, satisfying the cooling capacity demand of the battery pack or the data computer room. Moreover, it is also possible to avoid low-frequency operation of the compressor in a low-temperature environment, avoiding problems such as liquid carryover compression and unsatisfactory oil return caused by the low-frequency operation of the compressor, vibration noise and even pipeline breakage caused by a high compressor vibration.

It should be noted that in this embodiment, flow rates of refrigerants in the first refrigerant branch and the second refrigerant branch may be adjusted to allow for mutual cooperation of a cooling release capacity of the first heat exchanger and a cooling storage capacity in the cold storage device. On the premise that the outlet temperature of the cooling liquid main path may be smaller than or equal to the first set value, satisfying the cooling capacity demand of the battery pack or the data computer room, the compressor in the refrigeration unit is caused to operate within the rated power, avoiding the low-frequency operation of the compressor.

Further, in this embodiment, the control method further comprises the operation of obtaining the electricity price information. In some embodiments, the electricity price information refers to the peak-valley time-of-use electricity price. The peak-valley time-of-use electricity price means that 24 hours a day are divided into the plurality of time periods such as the peak, flat and valley periods according to the load change of the power grid, and different electricity price levels are set for each period to encourage the electricity customers to arrange their electricity usage time reasonably, shift electricity from the peak periods to off the peak periods, and improve the utilization efficiency of power resources. Therefore, considering the comprehensive factors such as improving the utilization rate of power resources and saving the electricity costs, when the electricity price is in the valley period, the second set value is set to the first temperature. When the electricity price is in the peak period, the second set value is set to the second temperature. The first temperature is greater than the second temperature.

It can be understood that when the electricity price is in the valley period, there are fewer electricity customers, and the electricity cost is relatively low, so an ambient temperature condition for determining that the cold storage device performs cooling storage can be appropriately increased. For example, the second set value is set to the first temperature. When the electricity price is in the peak period, the electricity cost is relatively high, so the ambient temperature condition for determining that the cold storage device performs the cooling storage can be appropriately reduced. For example, the second set value is set to the second temperature. It can reduce the electricity cost of the temperature control device and improve the utilization efficiency of power resources on the premise of satisfying the cooling capacity demand of the battery pack or the data computer room.

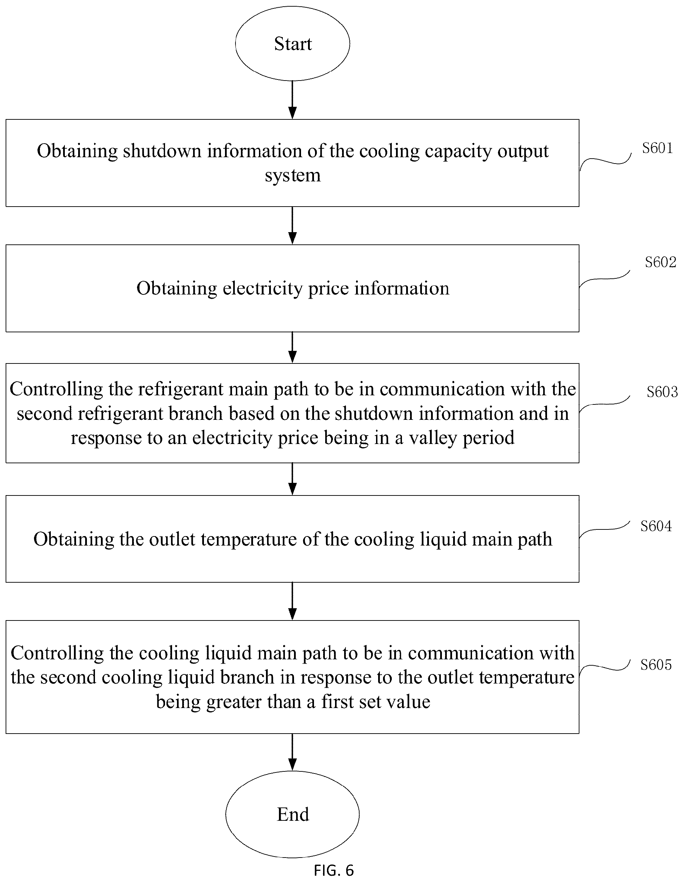

As shown in FIG. 6, according to some embodiments of the present disclosure, the control method comprises operations at blocks S601 to S605.

At block S601, shutdown information of the cooling capacity output system is obtained.

At block S602, electricity price information is obtained.

At block S603, the refrigerant main path is controlled to be in communication with the second refrigerant branch based on the shutdown information and in response to an electricity price being in a valley period.

At block S604, an outlet temperature of the cooling liquid main path is obtained.

At block S605, the cooling liquid main path is controlled to be in communication with the second cooling liquid branch in response to the outlet temperature being greater than the first set value.

In this embodiment, block S604 is the same as block S102, block S605 is the same as block S103, and details are omitted herein. In block S601, the shutdown information may be an electrical signal instruction transmitted by a host computer to the temperature control device to stop the operation of the cooling capacity output system, or may be a state signal based on the stop operation of a circulating water pump in the cooling capacity output system. When the shutdown information is obtained, it indicates that no temperature control demand occurs in the battery pack, the data computer room, or the like. In blocks S602 and S603, based on the comprehensive factors such as improving the utilization rate of power resources and saving the electricity costs, on the premise of obtaining the shutdown information, when the electricity price is in the valley period, the refrigeration unit may be controlled to start independently, and the cooling capacity is stored in the cold storage device by controlling the refrigerant main path to be in communication with the second refrigerant branch. In this way, when the battery pack, the data computer room, or the like has the cooling capacity demand, the cooling capacity stored in the cold storage device may be used and transported to the battery pack through the second cooling liquid branch and the cooling liquid main path, to make up for the insufficient cooling supply in the initial startup stage of the compressor in the refrigeration unit, satisfying the cooling capacity demand of the battery pack or the data computer room.

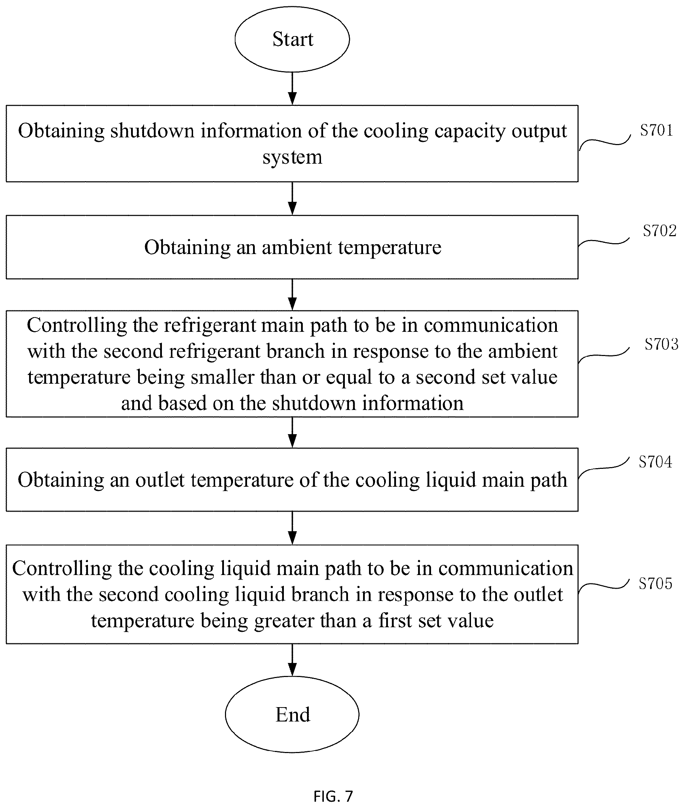

As shown in FIG. 7, according to some embodiments of the present disclosure, the control method comprises operations at blocks S701 to S705.

At block S701, shutdown information of the cooling capacity output system is obtained.

At block S702, an ambient temperature is obtained.

At block S703, the refrigerant main path is controlled to be in communication with the second refrigerant branch in response to the ambient temperature being smaller than or equal to a second set value and based on the shutdown information.

At block S704, an outlet temperature of the cooling liquid main path is obtained.

At block S705, the cooling liquid main path is controlled to be in communication with the second cooling liquid branch in response to the outlet temperature being greater than the first set value.

In this embodiment, block S701 is the same as block S601, block S704 is the same as block S102, block S705 is the same as block S103, and details are omitted herein. In block S702, the operating environment of the refrigeration unit may be known by obtaining the ambient temperature information, and comprise the heat exchange efficiency between the condenser of the refrigeration unit and the outside air. Generally, under the predetermined refrigeration demand, the lower the ambient temperature, the higher the heat exchange efficiency of the condenser, and the lower the load and the energy consumption of the refrigeration unit. Therefore, in block S303, when the ambient temperature is smaller than or equal to the second set value, it indicates that the ambient temperature is relatively low. Therefore, the low ambient temperature is used to start the refrigeration unit to cause the refrigerant main path to be in communication with the second refrigerant branch, and achieve the purpose of storing relatively much cooling capacity in the cold storage device with relatively low energy consumption, reducing the overall energy consumption during the long-term temperature control of the battery pack or the data computer room.

In the control method provided in the present disclosure, the first set value ranges from 0°C to 60°C, preferably from 5°C to 25°C. For example, the first set value may be 10°C, 15°C, 20°C, or the like.

The second set value ranges from -60°C to 60°C, preferably from -10°C to 20°C. The second set value may be appropriately adjusted according to optimal operating temperatures of different battery pack devices. For example, the second set value may be - 5°C, -2°C, 0°C, 2°C, 5°C, 8°C, 10°C, or the like.

An absolute value of a difference between the first temperature and the second temperature is greater than 0 and smaller than or equal to 20.

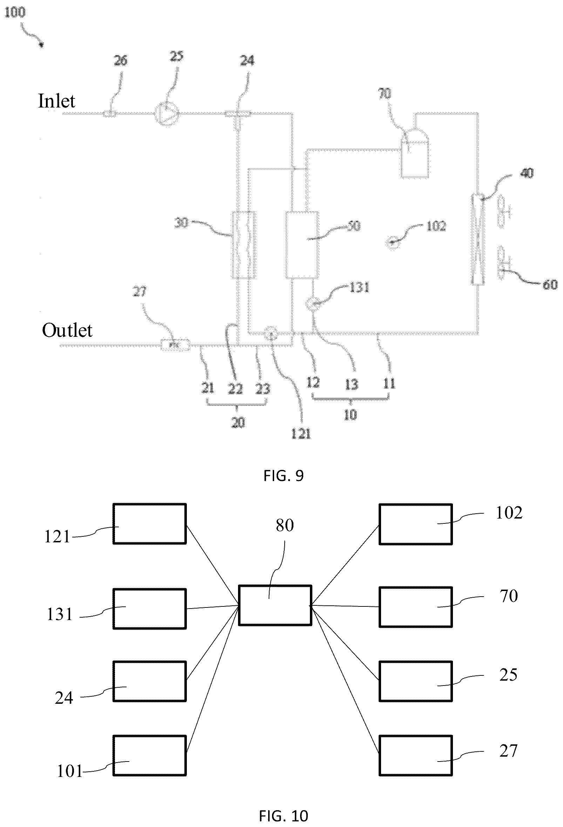

According to the embodiments of the present disclosure, a temperature control device 100 is further provided. As shown in FIG. 9 and FIG. 10, the temperature control device 100 comprises a refrigeration unit, a cooling capacity output system, a first heat exchanger 30, a cold storage device 50, a first temperature sensor 101, a second temperature sensor 102, and a control apparatus 80. In some embodiments, the refrigeration unit comprises a refrigerant circulation pipeline 10, a compressor 70 disposed on the refrigerant circulation pipeline 10, a second heat exchanger 40, and a fan unit 60 disposed at a side of the second heat exchanger 40. The refrigerant circulation pipeline 10 comprises a refrigerant main path 11, a first refrigerant branch 12, and a second refrigerant branch 13. The first refrigerant branch 12 and the second refrigerant branch 13 are connected in parallel with the refrigerant main path 11, and a refrigerant in the refrigerant main path 11 may complete its circulation flow through the first refrigerant branch 12 and the second refrigerant branch 13, respectively. The cooling capacity output system comprises a cooling liquid circulation pipeline 20, a circulating water pump 25, a filter 26, an electric heating element 27, and the like. The cooling liquid circulation pipeline 20 comprises a cooling liquid main path 21, a first cooling liquid branch 22, and a second cooling liquid branch 23. The first cooling liquid branch 22 and the second cooling liquid branch 23 are connected in parallel with the cooling liquid main path 21, and the cooling liquid in the cooling liquid main path 21 may complete its circulation flow through the first cooling liquid branch 22 and the second cooling liquid branch 23, respectively. The circulating water pump 25, the filter 26, and the electric heating element 27 are each disposed on the cooling liquid main path 21.

The first temperature sensor 101 is disposed at a cooling liquid main path 21 close to an outlet of the cooling liquid main path 21 and is used to obtain the outlet temperature of the cooling liquid main path 21.

In some embodiments, the first heat exchanger 30 is in communication with the first cooling liquid branch 22 and the first refrigerant branch 12, respectively. The cold storage device 50 is in communication with the second cooling liquid branch 23 and the second refrigerant branch 13, respectively. The cold storage device 50 is internally filled with a cold storage material for storing the cooling capacity. The first heat exchanger 30 is an evaporator for outputting the cooling capacity, and the second heat exchanger 40 is a condenser. During the operation of the temperature control device 100, the refrigeration unit starts the compressor 70 to transport the refrigerant to the second heat exchanger 40 for cooling, and then the refrigerant in the refrigerant main path 11 may be respectively transported to the first heat exchanger 30 and the cold storage device 50 through the first refrigerant branch 12 and the second refrigerant branch 13. The liquid refrigerant undergoes a phase change and evaporates in the first heat exchanger 30 or the cold storage device 50 to absorb heat, supplying the cooling capacity to the cooling capacity output system through the first heat exchanger 30 or the cold storage device 50. The cooling capacity output system transports the cooling capacity to the battery pack or the data computer room through the first cooling liquid branch 22 and the cooling liquid main path 21 or through the second cooling liquid branch 23 and the cooling liquid main path 21, realizing the temperature control of the battery pack or the data computer room.

The second temperature sensor 102 is used to obtain the ambient temperature.

In this embodiment, the control apparatus 80 is electrically connected to each of the refrigeration unit, the cooling capacity output system, the first temperature sensor 101, and the second temperature sensor 102. The control apparatus 80 is used to control connection/disconnection of the second refrigerant branch 13 and the second cooling liquid branch 23 according to the outlet temperature and the ambient temperature, realizing automatic control of the temperature control device 100.

In this embodiment, the temperature control device 100 further comprises a first valve assembly and a second valve assembly. The first valve assembly comprises a first electronic expansion valve 121 and a second electronic expansion valve 131. The first electronic expansion valve 121 is disposed on the first refrigerant branch 12 and located at an upstream side of the first heat exchanger 30, and the second electronic expansion valve 131 is disposed on the second refrigerant branch 13 and located at an upstream side of the cold storage device 50. The second valve assembly comprises a three-way valve 24. The three-way valve 24 is disposed on the cooling liquid circulation pipeline 20 and located at the upstream sides of the first heat exchanger 30 and the cold storage device 50. Three connection ports of the three-way valve 24 are in communication with the cooling liquid main path 21, the first cooling liquid branch 22, and the second cooling liquid branch 23, respectively. The control apparatus 80 is electrically connected to each of the first electronic expansion valve 121, the second electronic expansion valve 131, and the three-way valve 24. Therefore, the control apparatus 80 controls connection/disconnection and flow rates of the first refrigerant branch 12, the second refrigerant branch 13, the first cooling liquid branch 22, and the second cooling liquid branch 23 by controlling opening degrees of the first electronic expansion valve 121, the second electronic expansion valve 131, and the three-way valve 24, respectively.

In other embodiments, the second valve assembly comprises a first two-way valve (not shown) and a second two-way valve (not shown). The first two-way valve is disposed on the first cooling liquid branch 22 and located at the upstream side of the first heat exchanger 30. The second two-way valve is disposed on the second cooling liquid branch 23 and located at the upstream side of the cold storage device 50. The control apparatus 80 is electrically connected to each of the first two-way valve and the second two-way valve. Therefore, the control apparatus 80 controls the connection/disconnection and the flow rates of the first cooling liquid branch 22 and the second cooling liquid branch 23 by controlling the opening degrees of the first two-way valve and the second two-way valve, respectively.

In this embodiment, the control apparatus 80 is further configured to obtain the electricity price information and the shutdown information. The control apparatus 80 may control the opening degrees of the first electronic expansion valve 121, the second electronic expansion valve 131, and the three-way valve 24 comprehensively based on the electricity price information, the shutdown information, the outlet temperature, and the ambient temperature. In this way, controlling the connection/disconnection and the flow rates of the first refrigerant branch 12, the second refrigerant branch 13, the first cooling liquid branch 22, and the second cooling liquid branch 23 is realized.

The temperature control device 100 provided in the present disclosure has a plurality of operating modes according to the outlet temperature, the ambient temperature, the operating state of the circulating water pump 25, and the electricity price information. The following three operating modes are at least comprised.

A first operating mode is a cold storage mode.

In response to the circulating water pump 25 operating, the outlet temperature being greater than the first set temperature, and the ambient temperature being smaller than or equal to the first temperature when the electricity price is in the valley period or the ambient temperature being smaller than or equal to the second temperature when the electricity price is in the peak period, the cold storage mode of the temperature control device 100 is activated.

In the cold storage mode, the control apparatus 80 controls a connection port of the three-way valve 24 with the first cooling liquid branch 22 to be fully opened, and the valve causes the cooling liquid main path 21 to be fully in communication with the first cooling liquid branch 22. The control apparatus 80 controls a connection port of the three-way valve 24 with the second cooling liquid branch 23 to be closed, causing the second cooling liquid branch 23 to be disconnected, and a flow rate of a cooling liquid flowing from the second cooling liquid branch 23 to the cold storage device 50 is zero. The control apparatus 80 controls the compressor 70 to start, each of the first electronic expansion valve 121 and the second electronic expansion valve 131 to open, and the fan unit 60 to start.

In the cold storage mode, a flow sequence of the cooling liquid is from an inlet of the cooling liquid main path 21, to the cooling liquid main path 21, to the circulating water pump 25, to the three-way valve 24, to the first cooling liquid branch 22, to the first heat exchanger 30, to the first cooling liquid branch 22, to the cooling liquid main path 21, to the electric heating element 27, to the outlet of the cooling liquid main path 21. The refrigerant flow circulation in the refrigeration unit comprises two paths. One path is from a gas outlet of the compressor 70, to the refrigerant main path 11, to the second heat exchanger 40, to the refrigerant main path 11, to the first refrigerant branch 12, to the first electronic expansion valve 121, to the first heat exchanger 30, to the first refrigerant branch 12, to the refrigerant main path 11, to a gas return port of the compressor 70. Another path is from the gas outlet of the compressor 70, to the refrigerant main path 11, to the second heat exchanger 40, to the refrigerant main path 11, to the second refrigerant branch 13, to the second electronic expansion valve 131, to the cold storage device 50, to the second refrigerant branch 13, to the refrigerant main path 11, to the gas return port of the compressor 70.

In the cold storage mode, the control apparatus 80 adjusts and controls the opening degrees of the first electronic expansion valve 121 and the second electronic expansion valve 131 to adjust the refrigerant flow rates in the first refrigerant branch 12 and the second refrigerant branch 13, stores part of the cooling capacity in the cold storage device 50, and causes the compressor 70 in the refrigeration unit to operate within the rated power on the premise that the outlet temperature of the cooling liquid main path 21 may be smaller than or equal to the first set value, satisfying the cooling capacity demand of the battery pack or the data computer room. In this way, the low-frequency operation of the compressor 70 is avoided.

A second operating mode is a cooling release mode.

In response to the circulating water pump 25 operating, the outlet temperature being greater than the first set temperature, and the ambient temperature being greater than the first temperature when the electricity price is in the valley period or being greater than the second temperature when the electricity price is in the peak period, the cooling release mode of the temperature control device 100 is activated.

In the cooling release mode, the control apparatus 80 controls the connection port of the three-way valve 24 with the first cooling liquid branch 22 to be partially opened, and controls the connection port of the three-way valve 24 with the second cooling liquid branch 23 to be partially opened, which causes the cooling liquid main path 21 to be in communication with each of the first cooling liquid branch 22 and the second cooling liquid branch 23. Moreover, by adjusting a bidirectional opening degree ratio of the three-way valve 24, a requirement that the outlet temperature approaches or reaches the first set value may be satisfied. The control apparatus 80 controls the compressor 70 to start, the first electronic expansion valve 121 to open, the second electronic expansion valve 131 to close, and the fan unit 60 to start.

In the cooling release mode, the cooling liquid circulation comprises two paths. One path is from the inlet of the cooling liquid main path 21, to the cooling liquid main path 21, to the circulating water pump 25, to the three-way valve 24, to the first cooling liquid branch 22, to the first heat exchanger 30, to the first cooling liquid branch 22, to the cooling liquid main path 21, to the electric heating element 27, to the outlet of the cooling liquid main path 21. The other path is from the inlet of the cooling liquid main path 21, to the cooling liquid main path 21, to the circulating water pump 25, to the three-way valve 24, to the second cooling liquid branch 23, to the cold storage device 50, to the second cooling liquid branch 23, to the cooling liquid main path 21, to the electric heating element 27, to the outlet of the cooling liquid main path 21. The refrigerant flow circulation in the refrigeration unit is one path that is from the gas outlet of the compressor 70, to the refrigerant main path 11, to the second heat exchanger 40, to the refrigerant main path 11, to the first refrigerant branch 12, to the first electronic expansion valve 121, to the first heat exchanger 30, to the first refrigerant branch 12, to the refrigerant main path 11, to the gas return port of the compressor 70.

In the cooling release mode, the control apparatus 80 adjusts and controls the opening degree of the first electronic expansion valve 121 and a bidirectional flow rate ratio of the three-way valve 24, to coordinate and adjust a cooling release amount of the cold storage device 50. The cooling capacity stored in the cold storage device 50 is used to make up for the shortage caused by the power limitation of the compressor 70 itself in the refrigeration unit, reduce the load of the refrigeration unit, avoid the high-frequency operation of the compressor 70 in the refrigeration unit on the premise of satisfying the cooling capacity demand of the battery pack or the data computer room, and facilitate the long-term stable operation of the temperature control device 100.

A third operating mode is a standby cold storage mode.

When the circulating water pump 25 stops, the control apparatus 80 obtains the shutdown information of the circulating water pump 25, or the shutdown information is the shutdown information transmitted by the host computer to the temperature control device 100. The shutdown information is specifically a signal to stop cooling supply to the battery pack or the data computer room, thus causing the circulating water pump 25 to stop operating. When the control apparatus 80 obtains the shutdown information, it indicates that the battery pack or the data computer room has no cooling capacity demand, and the cooling capacity output system stops operating at this time. Moreover, when the electricity price is in the valley period or the ambient temperature is smaller than the second temperature, the standby cold storage mode is activated.

In the standby cold storage mode, the control apparatus 80 controls the compressor 70 to start, the second electronic expansion valve 131 to open, the first electronic expansion valve 121 to close, and the fan unit 60 to start. The circulating water pump 25 stops operating, and the three-way valve 24 does not act or executes a standby opening degree.

In the standby cold storage mode, a cooling liquid in the cooling liquid circulation pipeline 20 does not circulate. The refrigerant circulation in the refrigerant circulation pipeline 10 of the refrigeration unit has one path, and a flow sequence of the refrigerant is from the gas outlet of the compressor 70, to the refrigerant main path 11, to the second heat exchanger 40, to the refrigerant main path 11, to the second refrigerant branch 13, to the second electronic expansion valve 131, to the cold storage device 50, to the second refrigerant branch 13, to the refrigerant main path 11, to the gas return port of the compressor 70.

In this mode, when the cooling capacity output system in the temperature control device 100 is on standby, the cooling capacity may be stored in the cold storage device 50 by using the valley period of the electricity price, a low-temperature time period, or a low-temperature environment, to be used for cooling and use in the cooling release mode when needed, or as a cooling capacity supplement when the compressor 70 is started.

The temperature control device provided in the present disclosure has the following advantages.

A first advantage is that the present disclosure ensures stable refrigeration output by adding cold storage circulation, where surplus cooling capacity is stored for use when the cooling capacity is insufficient or the compressor is started.

A second advantage is that electricity resources during the "valley period" are fully utilized. Switching temperature points in different modes are set by distinguishing the peak period and the valley period, and more cooling storage is performed during the valley period and less cooling storage during the peak period to reduce power consumption of the compressor. In this way, the compressor can operate at its optimal operating point throughout the year, achieving an improvement in annual comprehensive energy efficiency.

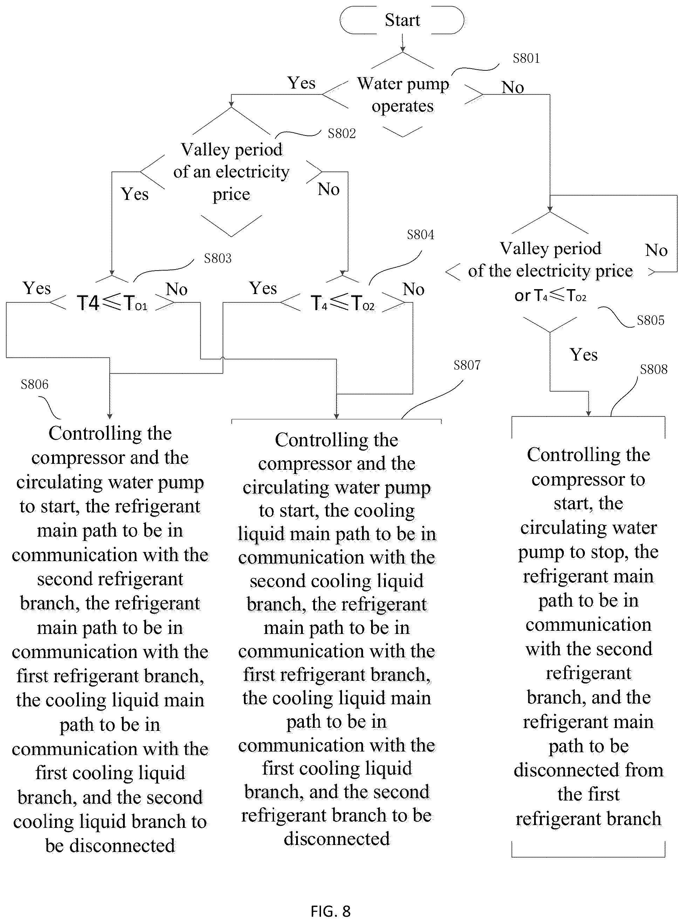

According to the embodiments of the present disclosure, a control method for a temperature control device is provided. As shown in FIG. 8, the control method specifically comprises operations at blocks S801 to S808:

At block S801, operation information of the circulating water pump is obtained, and it is determined whether the circulating water pump starts. In response to determining that the circulating water pump starts, block S802 is executed. In response to determining that the circulating water pump does not start, block S805 is executed.

At block S802, it is determined whether the electricity price is in the valley period. In response to determining that the electricity price is in the valley period, block S803 is executed. In response to determining that the electricity price is not in the valley period, block S804 is executed.

At block S803, it is determined whether an ambient temperature T4 is smaller than or equal to a first temperature TO1. In response to determining that the ambient temperature T4 is smaller than or equal to the first temperature TO1, block S806 is executed. In response to determining that the ambient temperature T4 is greater than the first temperature TO1, block S807 is executed.

At block S804, it is determined whether the ambient temperature T4 is smaller than or equal to a second temperature TO2. In response to determining that the ambient temperature T4 is smaller than or equal to the second temperature TO2, block S806 is executed. In response to determining that the ambient temperature T4 is greater than the second temperature TO2, block S807 is executed.

At block S805, it is determined whether the electricity price is in the valley period or whether the ambient temperature T4 is smaller than or equal to the second temperature TOL. In response to determining that the electricity price is in the valley period or the ambient temperature T4 is smaller than or equal to the second temperature TO1, block S808 is executed. In response to determining that the electricity price is not in the valley period and the ambient temperature T4 is greater than the second temperature TO1, return to the previous block.

At block S806, the compressor and the circulating water pump are controlled to start, the refrigerant main path is controlled to be in communication with the second refrigerant branch and the first refrigerant branch, the cooling liquid main path is controlled to be in communication with the first cooling liquid branch, and the second cooling liquid branch is controlled to be disconnected.

At block S807, the compressor and the circulating water pump are controlled to start, the cooling liquid main path is controlled to be in communication with the second cooling liquid branch, the refrigerant main path is controlled to be in communication with the first refrigerant branch, the cooling liquid main path is controlled to be in communication with the first cooling liquid branch, and the second refrigerant branch is controlled to be disconnected.

At block S808, the compressor is controlled to start, the circulating water pump is controlled to close, the refrigerant main path is controlled to be in communication with the second refrigerant branch, and the refrigerant main path is controlled to be disconnected from the first refrigerant branch.

According to the embodiments of the present disclosure, a computer storage medium is further provided. The computer storage medium has computer-readable instructions stored thereon. The computer-readable instructions, when executed by one or more processors, cause the one or more processors to execute the control method for the temperature control device in any one of the embodiments of the present disclosure. The processor involved in the present disclosure may be, for example, a processor on the temperature control device, and the temperature control device comprises, but is not limited to, at least one of a vehicle-mounted liquid-cooled air conditioner or an air-cooled chilled water air conditioner. The control method may comprise but is not limited to at least one of operations: controlling the refrigerant main path to be in communication with the second refrigerant branch; obtaining the outlet temperature of the cooling liquid main path; and controlling the cooling liquid main path to be in communication with the second cooling liquid branch in response to the outlet temperature being greater than the first set value.

The logic and/or operation described in other manners herein or shown in the flowchart, for example, a particular sequence table of executable instructions for realizing the logical function, may be specifically realized in any computer readable medium to be used by the instruction execution system, apparatus or device (such as the system based on computers, the system comprising processors or other systems capable of obtaining the instructions from the instruction execution system, apparatus and device and executing the instructions), or to be used in combination with the instruction execution system, apparatus and device. As to the specification, "the computer readable storage medium" may be any apparatus adaptive for comprising, storing, communicating, propagating or transferring programs to be used by or in combination with the instruction execution system, apparatus or device. More specific examples of the computer readable storage medium comprise but are not limited to: an electronic connection (an electronic apparatus) with one or more wires, a portable computer disk case (a magnetic apparatus), a random access memory (RAM), a read only memory (ROM), an erasable programmable read-only memory (EPROM or a flash memory), an optical fiber apparatus and a portable compact disk read-only memory (CDROM). In addition, the computer readable storage medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware or their combination. In the above embodiments, multiple operations or methods may be realized by the software or firmware stored in the memory and executed by the appropriate instruction execution system. For example, if it is realized by the hardware, likewise in another embodiment, the operations or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

According to some embodiments of the present disclosure, a heating and ventilation device is further provided. The heating and ventilation device comprises the temperature control device in any one of the technical solutions of the second aspect.

While the specific embodiments of the present disclosure have been described above, the protection scope of the present disclosure is not limited to these embodiments. Various variants and alternatives can be easily conceived by any of those skilled in the art without departing from the technical scope of the present disclosure. Therefore, these variants and alternatives are to be encompassed by the protection scope of present disclosure as defined by the claims as attached.

## Claims

1. A control method for a temperature control device, wherein the temperature control device comprises:
a refrigeration unit comprising a refrigerant main path, a first refrigerant branch, and a second refrigerant branch, the first refrigerant branch and the second refrigerant branch being connected in parallel with the refrigerant main path;
a cooling capacity output system comprising a cooling liquid main path, a first cooling liquid branch, and a second cooling liquid branch, the first cooling liquid branch and the second cooling liquid branch being connected in parallel with the cooling liquid main path;
a first heat exchanger, the first cooling liquid branch being thermally connected to the first refrigerant branch through the first heat exchanger; and
a cold storage device, the second cooling liquid branch being thermally connected to the second refrigerant branch through the cold storage device; and
wherein the control method comprises:
controlling the refrigerant main path to be in communication with the second refrigerant branch;
obtaining an outlet temperature of the cooling liquid main path; and
controlling the cooling liquid main path to be in communication with the second cooling liquid branch in response to the outlet temperature being greater than a first set value.

2. The control method according to claim 1, further comprising, prior to said controlling the cooling liquid main path to be in communication with the second cooling liquid branch in response to the outlet temperature being greater than the first set value:
obtaining an ambient temperature; and
controlling the cooling liquid main path to be in communication with the second cooling liquid branch in response to the ambient temperature being greater than a second set value and the outlet temperature being greater than the first set value.

3. The control method according to claim 2, further comprising:
controlling the refrigerant main path to be in communication with the first refrigerant branch, the cooling liquid main path to be in communication with the first cooling liquid branch, and the refrigerant main path to be disconnected from the second refrigerant branch in response to the ambient temperature being greater than the second set value and the outlet temperature being greater than the first set value.

4. The control method according to claim 1, further comprising, prior to said controlling the refrigerant main path to be in communication with the second refrigerant branch:
obtaining an ambient temperature; and
controlling the refrigerant main path to be in communication with the second refrigerant branch in response to the ambient temperature being smaller than or equal to a second set value.

5. The control method according to claim 4, further comprising:
controlling the refrigerant main path to be in communication with the first refrigerant branch, the cooling liquid main path to be in communication with the first cooling liquid branch, and the cooling liquid main path to be disconnected from the second cooling liquid branch in response to the outlet temperature being greater than the first set value and the ambient temperature being smaller than or equal to the second set value.

6. The control method according to claim 2 or 4, further comprising:
obtaining electricity price information;
setting the second set value to a first temperature in response to an electricity price being in a valley period; and
setting the second set value to a second temperature in response to the electricity price being in a peak period,
wherein the first temperature is greater than the second temperature.

7. The control method according to claim 1, further comprising, prior to said controlling the refrigerant main path to be in communication with the second refrigerant branch:
obtaining shutdown information of the cooling capacity output system and electricity price information; and
controlling the refrigerant main path to be in communication with the second refrigerant branch based on the shutdown information and in response to an electricity price being in a valley period.

8. The control method according to claim 1, further comprising, prior to said controlling the refrigerant main path to be in communication with the second refrigerant branch:
obtaining an ambient temperature;
obtaining shutdown information of the cooling capacity output system; and
controlling the refrigerant main path to be in communication with the second refrigerant branch in response to the ambient temperature being smaller than or equal to a second set value and based on the shutdown information.

9. A temperature control device, comprising:
a refrigeration unit comprising a refrigerant circulation pipeline, the refrigerant circulation pipeline comprising a refrigerant main path, a first refrigerant branch, and a second refrigerant branch, the first refrigerant branch and the second refrigerant branch being connected in parallel with the refrigerant main path;
a cooling capacity output system comprising a cooling liquid circulation pipeline, the cooling liquid circulation pipeline comprising a cooling liquid main path, a first cooling liquid branch, and a second cooling liquid branch, the first cooling liquid branch and the second cooling liquid branch being connected in parallel with the cooling liquid main path;
a first heat exchanger, the first cooling liquid branch being thermally connected to the first refrigerant branch through the first heat exchanger;
a cold storage device, the first cooling liquid branch being thermally connected to the first refrigerant branch through the first heat exchanger;
a first temperature sensor disposed at an outlet end of the cooling liquid main path and configured to detect an outlet temperature of the cooling liquid main path; and
a control apparatus electrically connected to the refrigeration unit, the cooling capacity output system, and the first temperature sensor, the control apparatus being configured to control connection/disconnection of the second refrigerant branch and the second cooling liquid branch based on the outlet temperature.

10. The temperature control device according to claim 9, further comprising:
a second temperature sensor electrically connected to the control apparatus, the second temperature sensor being configured to detect an ambient temperature,
wherein the control apparatus is further configured to obtain electricity price information and control connection/disconnection of the first refrigerant branch, the second refrigerant branch, the first cooling liquid branch, and the second cooling liquid branch based on the electricity price information, the outlet temperature, and the ambient temperature.

11. The temperature control device according to claim 10, further comprising:
a first valve assembly disposed in the refrigerant circulation pipeline and configured to control a refrigerant flow rate of the first refrigerant branch and the second refrigerant branch; and
a second valve assembly disposed in the cooling liquid circulation pipeline and configured to control a refrigerant flow rate of the first cooling liquid branch and the second cooling liquid branch;
wherein the control apparatus is electrically connected to the first temperature sensor, the second temperature sensor, the first valve assembly, and the second valve assembly.

12. A computer storage medium, having computer-readable instructions stored thereon, wherein the computer-readable instructions, when read by one or more processors, cause the one or more processors to execute a control method according to any one of claims 1 to 8.

13. A heating and ventilation device, comprising a temperature control device according to any one of claims 9 to 11.
